Europäisches Patentamt

European Patent Office

Office européen des brevets

(19)

(11) **EP 1 064 457 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **99913110.5**

(22) Anmeldetag: **10.03.1999**

(51) Int Cl.⁷: **F02D 41/38**, F02D 41/40

(86) Internationale Anmeldenummer:
**PCT/DE99/00652**

(87) Internationale Veröffentlichungsnummer:
**WO 99/47802 (23.09.1999 Gazette 1999/38)**

(54) **VERFAHREN ZUM BESTIMMEN DER EINSPRITZZEIT BEI EINER DIREKTEINSPRITZENDEN BRENNKRAFTMASCHINE**

METHOD FOR DETERMINING THE INJECTION TIME IN A DIRECT INJECTION INTERNAL COMBUSTION ENGINE

PROCEDE POUR DETERMINER LE TEMPS D'INJECTION DANS UN MOTEUR A COMBUSTION INTERNE A INJECTION DIRECTE

(84) Benannte Vertragsstaaten:
**DE FR GB**

(30) Priorität: **16.03.1998 DE 19811359**

(43) Veröffentlichungstag der Anmeldung:
**03.01.2001 Patentblatt 2001/01**

(73) Patentinhaber: **SIEMENS AKTIENGESELLSCHAFT**
**80333 München (DE)**

(72) Erfinder:
• **PRZYMUSINSKI, Achim**
**D-93049 Regensburg (DE)**
• **RADER, Thomas**
**D-72764 Reutlingen (DE)**
• **SCHERNEWSKI, Ralf**
**D-76185 Karlsruhe (DE)**

(56) Entgegenhaltungen:
US-A- 4 841 936          US-A- 5 176 122
US-A- 5 678 521

• **PATENT ABSTRACTS OF JAPAN vol. 012, no. 031 (M-663), 29. Januar 1988 & JP 62 186034 A (TOYOTA MOTOR CORP), 14. August 1987**

**Beschreibung**

Die Erfindung betrifft ein Verfahren zum Bestimmen der Einspritzzeit bei einer direkteinspritzenden Brennkraftmaschine gemäß dem Oberbegriff des Patentanspruches 1.

Bei der Diesel-Direkt-Einspritzung handelt es sich um eine Steuerung. Um den Verbrennungsverlauf hinsichtlich der Abgasemission und des Vebrennungsgeräusches zu optimieren, ist es bekannt, den Einspritzvorgang in eine oder mehrere Voreinspritzungen und in einen oder mehrere Haupteinspritzungen aufzuteilen. Die für die gewünschte Einspritzmenge in die Zylinder erforderliche Ansteuerzeit der Injektoren wird mittels eines Kennfelds ermittelt. Eine wichtige Eingangsgröße für das Kennfeld ist der momentane Druck in der Zuleitung bzw. im Druckspeicher, vielfach als Common Rail oder einfach als Rail bezeichnet, da dieser meßtechnisch erfaßt wird. Der Druck in der Zuleitung wird bei bekannten Systemen als konstant vorausgesetzt. D.h. es wird mit demselben Druck die Ansteuerzeit der Injektoren für die Vor- als auch die Haupteinspritzung ermittelt. Der Druck zwischen zwei aufeinanderfolgenden Einspritzungen, z.B. zwischen Vor- und Haupteinspritzung kann jedoch nur in grober Näherung als konstant angesehen werden, wie Messungen belegen. Es ergeben sich Druckschwankungen im Injektor und in der Zuleitung, die zu einer merklichen Änderung der Einspritzmenge führen.

Der Erfindung liegt die Aufgabe zugrunde, ein Verfahren zum Bestimmen der Einspritzzeit bei einer Brennkraftmaschine der Eingangs genannnten Art anzugeben, so daß bei einer Aufteilung des Einspritzvorganges in mehrere Einspritzungen die zuzuführende Kraftstoffmenge möglichst genau dem Sollwert entspricht.

Diese Aufgabe wird durch die Merkmale des Patentanspruches 1 gelöst. Vorteilhafte Weiterbildungen sind in den Unteransprüchen angegeben.

Die auftretenden Druckschwankungen während zwei aufeinanderfolgenden Einspritzungen (z.B. Vor-und Haupteinspritzung) innerhalb desselben Arbeitsspieles eines Zylinders in der Zuleitung zum Injektor werden mit einem Korrekturterm berücksichtigt und mit dem korrigierten Druck die Ansteuerzeit der Injektoren ermittelt, so daß die gewünschte Kraftstoffmenge eingespritzt wird. Der Korrekturterm wird mit Hilfe eines Least-Squares-Schätzers bestimmt, der in Abhängigkeit der geometrischen Daten des Systems, insbesondere der Länge der Zuleitung vom Rail zu dem Injektor und der physikalischen Randbedingungen, z.B. der Kraftstofftemperatur den Einspritzdruck an der Düse des Injektors schätzt.

Die Erfindung wird anhand der Figuren näher erläutert. Es zeigen

Figur 1    eine schematische Darstellung eines Einspritzsystems für eine direkteinspritzende Brennkraftmaschine,
Figur 2    den Verlauf der Ansteuerspannung für den Injektor,
Figur 3    den Druckverlauf in der Zuleitung bei einer Vor-und einer Haupteinspritzung,
Figur 4    einen Vergleich zwischen gemessenem Druckverlauf, geschätztem Druckverlauf und den daraus berechneten Fehler des Schätzers

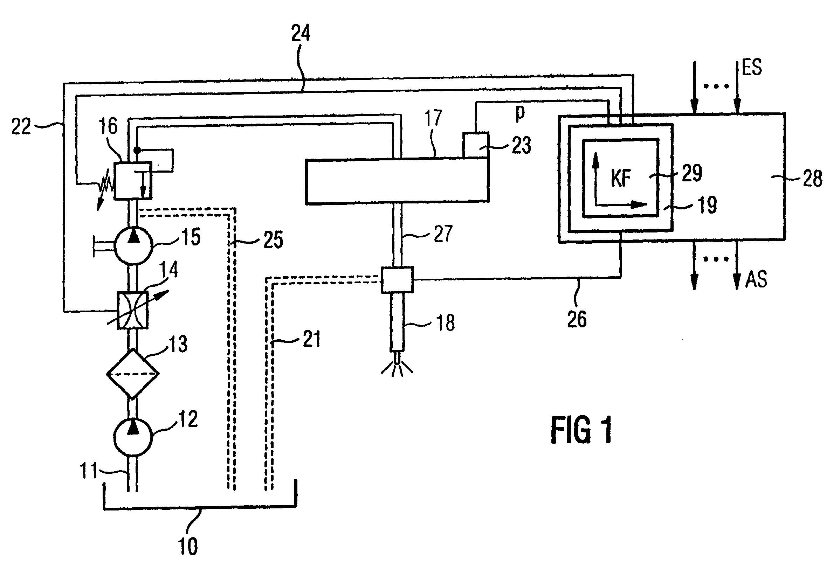

Die Figur 1 zeigt schematisch den Aufbau eines Kraftstoffeinspritzsystems für eine direkteinspritzende Brennkraftmaschine, wie sie unter der Bezeichnung Common-Rail-System vor allem bei Fahrzeugen mit einer Diesel-Brennkraftmaschine eingesetzt wird.

Bei diesem Einspritzsystem wird Kraftstoff aus einem Kraftstoffvorratsbehälter 10 über eine Kraftstoffleitung 11 durch eine Vorförderpumpe 12 angesaugt. Die Vorförderpumpe 12 fördert den Kraftstoff über einen Kraftstofffilter 13 zu einer Hochdruckpumpe 15, die den Kraftstoff verdichtet und unter hohem Druck in einen Hochdruckspeicher 17 einspeist.

Um den Volumenstrom der Hochdruckpumpe 15 in den Hochdruckspeicher 17 entsprechend den jeweiligen Betriebsbedingungen der Brennkraftmaschine bedarfsabhängig einstellen zu können, ist in der Kraftstoffleitung 11 zwischen der Vorförderpumpe 12 und der Hochdruckpumpe 15 ein zusätzliches Saugdrosselventil 14 angeordnet, mit dessen Hilfe der Förderstrom der Hochdruckpumpe 15 geregelt werden kann. Dieses Saugdrosselventil 14 wird von einer Steuereinheit 19 über eine Steuerleitung 22 angesteuert. Die Steuereinheit 19 ist vorzugsweise in ein elektronisches Steuergerät 28 der Brennkraftmaschine integriert, das alle zum Betrieb der Brennkraftmaschine nötigen Abläufe steuert und/oder regelt. Hierzu werden dem Steuergerät 28 der Brennkraftmaschine eine Vielzahl mittels entsprechender Sensorik aufgenommene Eingangssignale ES zugeführt. Über Ausgangssignale AS werden die einzelnen Aktoren und Komponenten angesteuert, die zum Betrieb der Brennkraftmaschine notwendig sind.

Um den Druck im Hochdruckspeicher 17 entsprechend den gewünschten Betriebsbedingungen der Brennkraftmaschine einstellen zu können, ist weiterhin nach der Hochdruckpumpe 15 ein Druckregelventil 16 in die Kraftstoffleitung 11 geschaltet. Dieses Druckregelventil 16 steuert und/ oder regelt über eine Kraftstoffleitung 25 überschüssigen Kraftstoff, der nicht zur Aufrechterhaltung eines im Hochdruckspeicher 17 gewünschten Drucks benötigt wird, in den Kraftstoffvorratsbehälter 10 ab, wobei der Haltedruck des Druckregelventils 16 von der Steuereinheit 19 über eine Steuerleitung 24 eingestellt wird. Zur Druckregelung im Hochdruckspeicher 17 ist weiter ein Drucksensor 23 vorgesehen. Dieser Drucksensor 23 dient zum Erfassen des augenblicklich im Hochdruckspeicher 17 herrschenden Druckes p, auf dessen Grundlage die Steuereinheit 19 entsprechend den gewünschten Betriebsbedingungen der Brennkraftmaschine die Druckregelung über das Druckregelventil 16 vornimmt.

Im Hochdruckspeicher 17 lassen sich mit Hilfe der dargestellten Druckregeleinrichtungen Kraftstoffdrücke von 0 bis 1500 bar erzeugen. Diese Kraftstoffdrücke stehen über Kraftstoffeinspritzleitungen 27 an Injektoren oder Einspritzventilen 18 (nur eines gezeigt), die in den Brennkammern der Brennkraftmaschine (nicht gezeigt) angeordnet sind, an. Diese Einspritzventile 18 weisen im allgemeinen eine Einspritzdüse auf, die mit einer unter Federkraft stehenden Nadel verschlossen ist. Der Einspritzvorgang wird durch die Steuereinheit 19 ausgelöst, die über Steuerleitungen 26 mit den Einspritzventilen 18 verbunden ist. Der in den Einspritzventilen 18 weiterhin auftretende Leckagestrom wird über Kraftstoffleitungen 21 in den Kraftstoffvorratsbehälter 10 zurückgeführt.

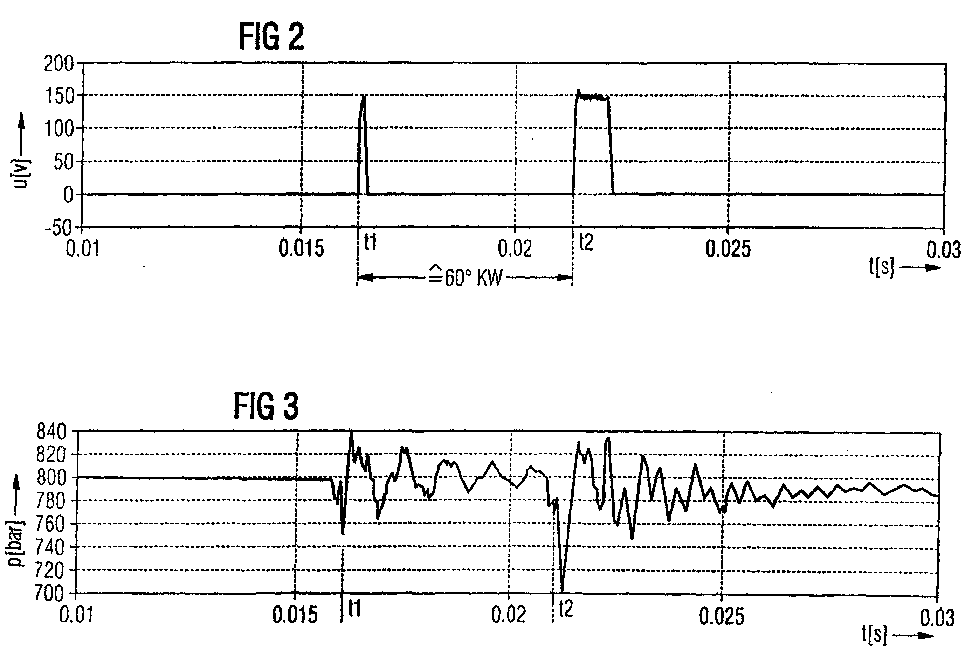

In Figur 2 ist der zeitliche Verlauf des Ansteuersignals U für einen Injektor dargestellt. Zum Zeitpunkt t1 wird der Injektor zur Auslösung einer Voreinspritzung angesteuert. Nach einem zeitlichen Abstand, der bei einer vorgegebenen Drehzahl in diesem Bespiel 60°Kurbelwinkel KW entspricht, erfolgt um Zeitpunkt t2 die Haupteinspritzung.

Der sich aufgrund einer solchen Ansteuerung des Injektors ergebende zeitliche Druckverlauf ist in Figur 3 gezeigt. Das Öffnen der Düse des Injektors löst eine Druckschwankung aus, die zum Zeitpunkt des Beginns der Haupteinspritzung noch nicht abgeklungen ist. Wie aus dieser Darstellung ersichtlich ist, ist der Startdruck zu Beginn der Haupteinspritzung unterschiedlich zu dem Druck bei Beginn der Voreinspritzung. In Abhängigkeit von dem Abstand zwischen den beiden Einspritzungen kann der Startdruck für die Haupteinspritzung höher oder niedriger sein und ändert zudem in Form einer gedämpften Schwingung ständig seinen Wert.

Mit Hilfe der aus der Signalverarbeitung bekannten Short-Time FFT (Fast Fourier Transformation) werden die typischen Frequenzen und die Amplitude der Schwingungen ermittelt, die durch den Einspritzvorgang ausgelöst werden.

Die Short-Time-FFT dient dazu, bei instationären Signalen, den Frequenzverlauf über der Zeit zu analysieren. Dazu wird der gemessene Datensatz in Abschnitte, in denen das Signal als stationär angesehen werden kann, unterteilt und diese dann einzeln mittels einer FFT in den Frequenzbereich transformiert.

Der Beginn der Schwingung kann nicht mittels Short-Time-FFT bestimmt werden, da die Frequenzauflösung zu gering wird. Eine Möglichkeit ist die Verwendung der Kreuzkorrelationsfunktion. Eine auf eine Periode zeitlich beschränkte Schwingung der gesuchten Frequenz wird hierbei mit dem Meßdatensatz korreliert. Das sich dabei ergebende relative Extremum entspricht dann dem zeitlichen Beginn der Schwingung.

Die durch den Einspritzvorgang ausgelösten Druckschwankungen können mit dem Signalansatz für eine gedämpfte Schwingung beschrieben werden. Es gilt allgemein:

$$y(t) = A \cdot e^{-d \cdot (t - t_0)} \cdot \sin\left(2 \cdot \pi \cdot f(t - t_0) + \varphi\right) \cdot \sigma(t - t_0)$$

mit

A      Amplitude
d      Dämpfungsfaktor
$t_0$      Startzeitpunkt der Schwingung
f      Frequenz
φ      Phase
$\sigma(t - t_0)$      Sprungfunktion zum Zeitpunkt $t_0$=0

Um diesen Signalansatz vollständig zu beschreiben, benötigt man die fünf Parameter Amplitude, Dämpfungsfaktor, Startzeitpunkt der Schwingung, Frequenz und Phase.

Die Frequenz f wird aus der Frequenzanalyse mittels der FFT erhalten und der Startzeitpunkt der Schwingung mit der Kreuzkorrelationsfunktion gewonnen. Die Amplitude A, die Dämpfung d und die Phase φ werden für das Signalmodell, nämlich mit dem später näher beschriebenen Least-Squares-Schätzer bestimmt.

Die Kraftstoffmasse in der Zuleitung des Injektors wird vor dem Beginn der Voreinspritzung als ruhend angenommen. Durch das Öffnen der Düsennadel des Injektors breitet sich ausgehend vom Sackloch eine Druckwelle aus. Diese Verdünnungswelle bewegt sich durch den Injektor, in die Zuleitung und schließlich in das Rail. Aufgrund des Druckabfalls am Sackloch setzt sich die Kraftstoffmasse in Bewegung. Kraftstoffteilchen die nahe am Sackloch liegen, setzen sich in Bewegung, der Kraftstoff entspannt sich. Das heißt die Verdünnungswelle löst eine Verdichtungswelle mit entgegengesetzter Ausbreitungsrichtung aus. Dadurch wird der Druck im Sackloch wieder erhöht. Durch diese Bewegung entsteht eine gedämpfte Schwingung des Druckes im Sackloch. Diese Schwingung kann ausgehend von der oben allgemein angegebenen Gleichung angegeben werden zu:

$$p(t)_{Offnen} = A_{Offnen} \cdot e^{-d_{Offnen} \cdot (t-t_{Start}-t_{Delay1})} \cdot \sin\left(\omega_{Offnen}\left(t - t_{Start} - t_{Delay1}\right) + \varphi_{Offnen}\right)$$
$$\cdot \sigma\left(t - t_{Start} - t_{Delay1}\right)$$

mit

| | |
|---|---|
| $A_{\text{öffnen}}$ | Amplitude der Öffnungswelle |
| $d_{\text{Öffnen}}$ | Dämpfung der Öffnungswelle |
| $\varphi_{\text{Öffnen}}$ | Phase der Öffnungswelle |
| $\omega_{\text{Öffnen}}$ | Frequenz der Öffnungswelle |
| $t_{\text{Start}}$ | Start der Ansteuerung |
| $t_{\text{Delay1}}$ | Verzugszeit bis zum öffnen der Nadel |
| $t_0$ | $= t_{\text{Delay1}} - t_{\text{Start}}$ |

Durch das Schließen der Düsennadel wird die Kraftstoffmenge im Sackloch ruckartig abgebremst. Es läuft eine Verdichtungswelle durch den Injektor in die Leitung und ins Rail (vgl. oben).

$$p(t)_{Schließen} = A_{Schließen} \cdot e^{-d_{Schließen}\left(t-t_{Ende}-t_{Delay2}\right)} \cdot \sin(\omega_{Schließen}\left(t - t_{Ende} - t_{Delay2}\right) + \varphi_{Schließen})$$
$$\cdot \sigma\left(t - t_{Ende} - t_{Delay2}\right)$$

mit

| | |
|---|---|
| $A_{\text{Schließen}}$ | Amplitude der Schließwelle |
| $d_{\text{Schließen}}$ | Dämpfung der Schließwelle |
| $\varphi_{\text{Schließen}}^{n}$ | Phase der Schließwelle |
| $\omega_{\text{Schließen}}$ | Frequenz der Schließwelle |
| $t_{\text{Ende}}$ | Ende der Ansteuerung |
| $t_{\text{Delay2}}$ | Verzugszeit bis zum Schließen der Nadel |

Bezeichnet man mit $p(t)_{Meß}$ den Druckverlauf, wie er sich aufgrund des öffnens und Schließens der Düsennadel, sowie des konstanten Raildruckes $p_{konstant}$ einstellt, so gilt:

$$p(t)_{Meß} = p_{konstant} + p(t)_{Offnen} + p(t)_{Schließen},$$

wobei $p_{konstant}$ mit dem Drucksensor 23 (Fig. 1) ermittelt wird.
Werden in diese Gleichung die oben angegebenen Terme eingesetzt, so ergibt sich

$$p(t)_{Meß} = p_{konstant} + A_{Offnen} \cdot e^{-d_{Offnen}\left(t-t_{Start}-t_{Delay1}\right)} \cdot \sin\left(\omega_{Offnen}\left(t - t_{Start} - t_{Delay1}\right) + \varphi_{Offnen}\right)$$
$$\cdot \sigma\left(t - t_{Start} - t_{Delay1}\right) + A_{Schließen} \cdot e^{-d_{Schließen}\left(t-t_{Ende}-t_{Delay2}\right)}$$
$$\cdot \sin\left(\omega_{Schließen}\left(t - t_{Ende} - t_{Delay2}\right) + \varphi_{Schließen}\right) \cdot \sigma\left(t - t_{Ende} - t_{Delay2}\right)$$

Der Least-Squares-Schätzer ist ein linearer Schätzer, d.h. die Frequenzen der Schwingungen müssen aus einer Zeit-Frequenz-Analyse gewonnen werden.
Die Dämpfung d kann mittels einer Konstanten während des Entwurfs korrigiert werden oder mittels eines Potenzreihenansatzes geschätzt werden.

$$e^{-dt} = 1 - \frac{dt}{1!} + \frac{(dt)^2}{2!} - \frac{(dt)^3}{3!} + \ldots$$

Eine weitere Möglichkeit zur besseren Bestimmung der Amplitude, Phase und der Dämpfung bietet der Least-Squares-Schätzer.

Der Schätzer wird hier exemplarisch für eine Frequenz für eine auftretende gedämpfte Schwingung aufgestellt.

$$p(t) = A \cdot e^{-d(t-t_0)} \cdot \sin\left(\omega(t-t_0) + \varphi\right) \cdot \sigma(t-t_0)$$

$$p(t) = A \cdot e^{-d(t-t_0)} \cdot \left[\cos\varphi \cdot \sin\left(\omega(t-t_0)\right) + \sin\varphi \cdot \cos\left(\omega(t-t_0)\right)\right] \cdot \sigma(t-t_0)$$

$$p(t) = A \cdot \cos\varphi \cdot e^{-d(t-t_0)} \cdot \sin\left(\omega(t-t_0)\right) \cdot \sigma(t-t_0) + A \cdot \sin\varphi \cdot e^{-d(t-t_0)}$$
$$\cdot \cos\left(\omega(t-t_0)\right) \cdot \sigma(t-t_0)$$

$$p(t) = \left[e^{-d(t-t_0)} \cdot \cos\left(\omega(t-t_0)\right) \cdot \sigma(t-t_0) \cdot e^{-d(t-t_0)} \cdot \sin\left(\omega(t-t_0)\right) \cdot \sigma(t-t_0)\right]$$
$$\cdot \begin{bmatrix} A \cdot \sin\varphi \\ A \cdot \cos\varphi \end{bmatrix}$$

Allgemein gilt für einen linearen Least-Square-Schätzer:

$$\bar{y} = A \cdot \bar{b} + \bar{e} \qquad \text{mit } \bar{b} \text{ als Schätzvektor des Signalmodells}$$

Hieraus folgt:

$$\bar{y} = \begin{bmatrix} x_1 \cdot x_2 \end{bmatrix} \cdot \begin{bmatrix} b_1 \\ b_2 \end{bmatrix} + \bar{e}$$

angewandt auf den vorliegenden Fall gilt

$$x_1 = e^{-d(t-t_0)} \cdot \cos\left(\omega(t-t_0)\right) \cdot \sigma(t-t_0)$$

$$x_2 = e^{-d\cdot(t-t_0)} \cdot \sin\left(\omega\left(t - t_0\right)\right) \cdot \sigma\left(t - t_v\right)$$

$$b_1 = A \cdot \sin \varphi$$

$$b_2 = A \cdot \cos \varphi$$

Für den Schätzer folgt nun:

$$\hat{b}_{LS} = (X^T \cdot X)^{-1} \cdot X^T.$$

Diese Inverse existieren immer, wenn die Basis b1,b2 linear unabhängig ist.

Das Symbol "Λ" über dem jeweiligen Parameter bedeutet, daß es sich um Schätzwerte handelt.

Es ergeben sich dann:

$$\frac{\hat{b}_1}{\hat{b}_2} = \frac{A \cdot \sin\varphi}{A \cdot \cos\varphi} = \tan\varphi$$

Daraus folgt für die Phase die Beziehung

$$\varphi = \arctan\frac{\hat{b}_1}{\hat{b}_2}$$

und für die Amplitude

$$A = \frac{\hat{b}_2}{\cos(\arctan\frac{\hat{b}_1}{\hat{b}_2}}$$

Das geschätzte Signal, d.h. der geschätzte Druckverlauf ergibt sich dann zu:

$$p(t) = \frac{\hat{b}_2}{\cos(\arctan\frac{\hat{b}_1}{\hat{b}_2})} \cdot e^{-d(t-t_0)} \cdot \sin\left(\omega\left(t - t_0\right) + \arctan\frac{\hat{b}_1}{\hat{b}_2}\right) \cdot \sigma\left(t - t_0\right)$$

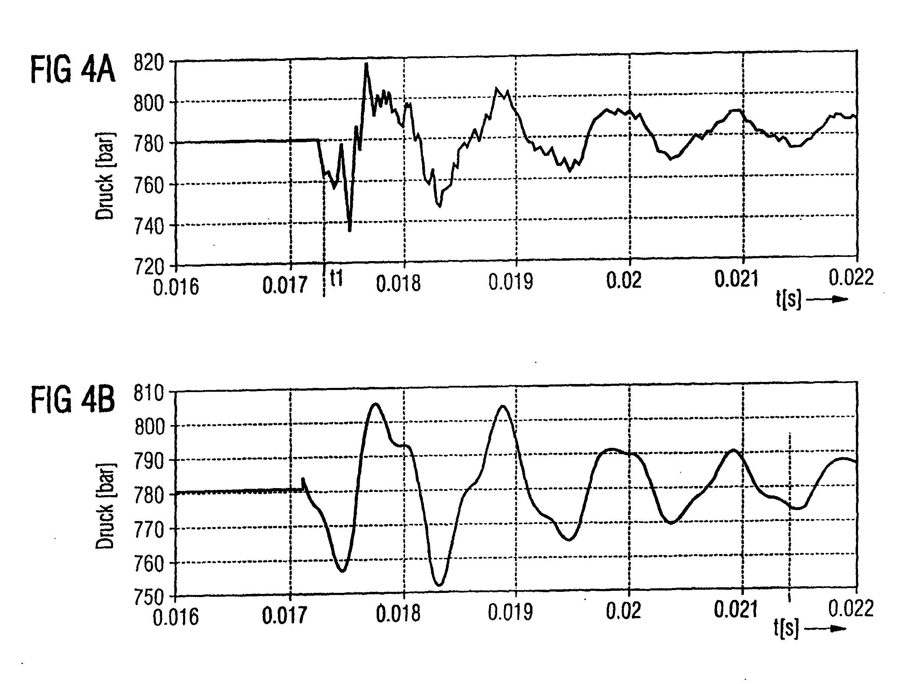

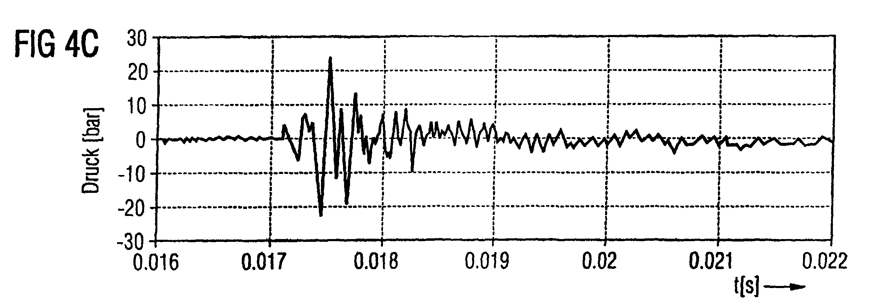

In Figur 4b ist dieser geschätzte Druckverlauf p(t) graphisch dargestellt. Der in der Zuleitung (Kraftstoffeinspritzleitung 27 in Figur 1) zum Injektor tatsächlich auftretende Druckverlauf ist in Figur 4a dargestellt. Zum Zeitpunkt t1 (=$t_{Start}$) wird die Voreinspritzung ausgelöst. Bis zu diesem Zeitpunkt wird die Kraftstoffmasse als ruhend angenommen (konstanter Wert des Druckes 780 bar). In Figur 4c ist der absolute Fehler als Differenz zwischen gemessenem Druckverlauf (Figur 4a) und geschätztem Druckverlauf (Figur 4b) aufgetragen.

Zu jedem beliebigen Zeitpunkt nach erfolgtem Einspritzvorgang (z.B. Voreinspritzung) kann also der Druck mittels dem angegebenen Verfahren abgeschätzt werden. Da der Zeitpunkt des Beginns des nachfolgenden Einspritzvorganges (z.B. Haupteinspritzung) frei gewählt werden kann und bekannt ist, kann der zu diesem Zeitpunkt vorliegende Druckwert bei der Einspritzzeitberechnung für diesen Einspritzvorgang berücksichtigt werden. Dies kann beispielsweise dadurch geschehen, daß als Eingangsgröße für ein in einem Speicher 29 der Steuereinheit 19 abgelegtes Kennfeld KF, in dem abhängig vom momentanen Wert für den Raildruck und der geforderten Kraftstoffeinspritzmenge Einspritzzeiten abgelegt sind, nicht der gemessene Druck im Rail, sondern ein um den geschätzten Druckwert zum Einspritzbeginn korrigierter Druckwert verwendet wird. Damit kann die geforderte Kraftstoffmenge mit hoher Genauigkeit zugemessen werden.

**Patentansprüche**

1. Verfahren zum Bestimmen der Einspritzzeit bei einer direkteinspritzenden Brennkraftmaschine mit einem Kraftstoff enthaltenden Hochdruckspeicher (17), der mit einem Injektor (18) in Verbindung steht, so daß Kraftstoff abhängig von mindestens dem Druck im Hochdruckspeicher (17) und einer geforderten Kraftstoffmenge gesteuert in den Zylinder der Brennkraftmaschine eingespritzt werden kann, wobei

   - eine berechnete und einem Zylinder der Brennkraftmaschine zuzuführende Gesamtmenge an Kraftstoff auf mindestens zwei Einspritzvorgänge pro Zylinderhub aufgeteilt ist und
   - die zwischen zwei einzelnen Einspritzvorgängen (n, n+1) auftretenden Druckschwankungen im Injektor (18) und in der Leitung (27) zwischen Hochdruckspeicher (17) und Injektor (18) bei der Bestimmung der Einspritzzeit für den nächsten Einspritzvorgang (n+1) berücksichtigt wird.

2. Verfahren nach Anspruch 1, **dadurch gekennzeichnet, daß** die Gesamtmenge an Kraftstoff mittels einer Voreinspritzung (n) und einer Haupteinspritzung (n+1) zugemessen wird und die durch die Voreinspritzung ausgelösten Druckschwankungen bei der Bestimmung der Einspritzzeit für die Haupteinspritzung berücksichtigt wird.

3. Verfahren nach Anspruch 1, **dadurch gekennzeichnet, daß** die Gesamtmenge an Kraftstoff mittels mehrerer Voreinspritzungen (n, n+1, n+i) und einer Haupteinspritzung (n+i+1) zugemessen wird und die durch die jeweiligen Voreinspritzungen ausgelösten Druckschwankungen bei der Bestimmung der Einspritzzeit für die jeweils darauffolgende Voreinspritzung bzw. der folgenden Haupteinspritzung berücksichtigt wird.

4. Verfahren nach einem der Ansprüche 1-3, **dadurch gekennzeichnet, daß** aus den zwischen den einzelnen Einspritzvorgängen (n,n+1) auftretenden Druckschwankungen jeweils ein Korrekturterm ermittelt wird, mit dem der Druck im Hochdruckspeicher (17) korrigiert wird und mit dem korrigierten Druckwert die Einspritzzeit ermittelt wird.

5. Verfahren nach Anspruch 4, **dadurch gekennzeichnet, daß** der korrigierte Druckwert Eingangsgröße eines Kennfeldes (KF) ist, in dem abhängig von der geforderten Kraftstoffmenge die Einspritzzeiten abgelegt sind.

6. Verfahren nach Anspruch 1, **dadurch gekennzeichnet, daß** der Korrekturterm mit Hilfe eines Least-Square-Schätzers bestimmt wird, der in Abhängigkeit der geometrischen Daten des Einspritzsystems und der physikalischen Randbedingungen den Einspritzdruck an der Düse des Injektors (17) auf der Basis der Gleichung einer gedämpften Schwingung für die Druckschwankungen ermittelt.

7. Verfahren nach Anspruch 6, **dadurch gekennzeichnet, daß** für die Schätzgleichung für die Druckschwankungen gilt

$$y(t) = A \cdot e^{-d \cdot (t-t_0)} \cdot \sin\left(2 \cdot \pi \cdot f(t-t_0) + \varphi\right) \cdot \sigma(t-t_0)$$

mit

| | |
|---|---|
| A | Amplitude der Schwingung |
| d | Dämpfungsfaktor |
| $t_0$ | Startzeitpunkt der Schwingung |
| f | Frequenz |
| φ | Phase |
| $\sigma(t - t_0)$ | Sprungfunktion zum Zeitpunkt t=0 |

8. Verfahren nach Anspruch 7, **dadurch gekennzeichnet, daß** für den geschätzten Druckverlauf folgende Gleichung gilt:

$$p(t) = \frac{\hat{b}_2}{\cos(\arctan\frac{\hat{b}_1}{\hat{b}_2})} \cdot e^{-d(t-t_0)} \cdot \sin\left(\omega(t-t_0) + \arctan\frac{\hat{b}_1}{\hat{b}_2}\right) \cdot \sigma(t-t_0)$$

## Claims

1. Method for determining the injection time in a direct-injection internal combustion engine having a high-pressure reservoir (17) which contains fuel and is connected to an injector (18) so that fuel can be injected under control into the cylinder of the internal combustion engine as a function of at least the pressure in the high-pressure reservoir (17) and the required fuel quantity,

   - the calculated total quantity of fuel which is to be fed to a cylinder of the internal combustion engine being split up into at least two injection processes per cylinder stroke, and
   - the pressure fluctuations in the injector (18), which occur between two individual injection processes (n, n+1), and in the line (27) between the high-pressure reservoir (17) and injector (18) are taken into account when determining the injection time for the next injection process (n+1).

2. Method according to Claim 1, **characterized in that** the total quantity of fuel is dosed by means of a pre-injection (n) and a main injection (n+1), and the pressure fluctuations initiated by the pre-injection are taken into account when determining the injection time for the main injection.

3. Method according to Claim 1, **characterized in that** the total quantity of fuel is dosed by means of a plurality of pre-injections (n, n+1, n+i) and one main injection (n+i+1) and the pressure fluctuations initiated by the respective pre-injections are taken into account when determining the injection time for the respectively following pre-injection or the following main injection.

4. Method according to one of Claims 1-3, **characterized in that** the pressure fluctuations occurring between the individual injection processes (n,n+1) are used in each case to determine a correction term with the aid of which the pressure in the high-pressure reservoir (17) is corrected, and the injection time is determined with the aid of the corrected pressure value.

5. Method according to Claim 4, **characterized in that** the corrected pressure value is an input variable of a characteristic diagram (KF) in which the injection times are stored as a function of the required fuel quantity.

6. Method according to Claim 1, **characterized in that** the correction term is determined with the aid of a least-squares estimator which, on the basis of the equation of the damped oscillation for the pressure fluctuations determines the injection pressure at the nozzle of the injector (17) as a function of the geometrical data of the injection system and of the physical boundary conditions.

7. Method according to Claim 6, **characterized in that** it holds for the estimation equation for the pressure fluctuations that

$$y(t) = A \cdot e^{-d \cdot (t-t_0)} \cdot \sin\left(2 \cdot \pi \cdot f(t-t_0) + \varphi\right) \cdot \sigma(t-t_0)$$

where

    A       is the amplitude of the oscillation
    d       is the damping factor
    $t_0$     is the starting instant of the oscillation
    f       is the frequency
    $\varphi$     is the phase, and

$\sigma(t\text{-}t_0)$      is the jump function at the instant t=0.

8. Method according to Claim 7, **characterized in that** the following equation holds for the estimated pressure characteristic:

$$p(t) = \frac{\hat{b}_2}{\cos(\arctan\frac{\hat{b}_1}{\hat{b}_2})} \cdot e^{-\vartheta(t-t_0)} \cdot \sin\left(\omega(t-t_0) + \arctan\frac{\hat{b}_1}{\hat{b}_2}\right) \cdot \sigma(t-t_0) \cdot$$

## Revendications

1. Procédé de détermination du temps d'injection dans un moteur à combustion interne à injection directe, au moyen d'un accumulateur haute pression (17) qui contient du carburant et qui communique avec un injecteur (18), de façon que le carburant puisse être injecté d'une manière commandée dans le cylindre du moteur à combustion interne en fonction au moins de la pression dans l'accumulateur haute pression (17) et d'une quantité de carburant refoulée, selon lequel

   - une quantité totale de carburant calculée et devant être envoyée à un cylindre du moteur à combustion interne est divisée en au moins deux opérations d'injection par course de cylindre et
   - lors de la détermination du temps d'injection pour l'opération d'injection suivante (n + 1), il est tenu compte des fluctuations de pression dans l'injecteur (18) et dans la ligne (27) située entre l'accumulateur haute pression (17) et l'injecteur (18) qui se présentent entre deux opérations d'injection élémentaires (n + 1)

2. Procédé suivant la revendication 1, **caractérisé en ce que** la quantité totale de carburant est fournie d'une manière dosée au moyen d'une pré-injection (n) et d'une injection principale (n + 1) et, lors de la détermination du temps d'injection pour l'injection principale, il est tenu compte des fluctuations de pression déclenchées par la pré-injection.

3. Procédé suivant la revendication 1, **caractérisé en ce que** la quantité totale de carburant est fournie d'une manière dosée au moyen de plusieurs pré-injections (n, n+1, n+i) et d'une injection principale (n+i+1) et, lors de la détermination du temps d'injection pour la pré-injection chaque fois suivante ou l'injection principale suivante, il est tenu compte des fluctuations de pression déclenchées par les pré-injections respectives.

4. Procédé suivant l'une des revendications 1 - 3, **caractérisé en ce qu'**à partir des fluctuations de pression se présentant entre les différentes opérations d'injection (n, n+1), il est chaque fois déterminé un terme de correction au moyen duquel la pression dans l'accumulateur haute pression (17) est corrigée et le temps d'injection est déterminé avec la valeur de pression corrigée.

5. Procédé suivant la revendication 4, **caractérisé en ce que** la valeur de pression corrigée est une grandeur d'entrée d'une table caractéristique (KF) dans laquelle les temps d'injection sont conservés en mémoire en fonction de la quantité de carburant refoulée.

6. Procédé suivant la revendication 1, **caractérisé en ce que** le terme de correction est déterminé au moyen d'un estimateur des plus petits carrés qui, en fonction des données géométriques du dispositif d'injection et des conditions limites physiques, détermine la pression d'injection à l'endroit de l'orifice calibré de l'injecteur (17) sur la base de la comparaison d'une oscillation amortie pour les fluctuations de pression.

7. Procédé suivant la revendication 6, **caractérisé en ce que**, pour l'équation d'estimation pour les fluctuations de pression, on a :

$$y(t) = A \cdot e^{-d \cdot (t-t_0)} \cdot \sin\left(2 \cdot \pi \cdot f(t - t_0) + \varphi\right) \cdot \sigma(t - t_0)$$

dans laquelle :

A est      l'amplitude de l'oscillation
d      le facteur d'amortissement
$t_0$      l'instant initial de l'oscillation
f      la fréquence
$\varphi$      la phase
$\sigma(t - t_0)$      la fonction échelon à l'instant t = 0.

8. Procédé suivant la revendication 7, **caractérisé en ce que**, pour la variation de pression estimée, on a l'équation suivante :

$$p(t) = \frac{\hat{b}_2}{\cos\left(\arctan\dfrac{\hat{b}_1}{\hat{b}_2}\right)} \cdot e^{-d(t-t_0)} \cdot \sin\left(\omega(t - t_0) + \arctan\frac{\hat{b}_1}{\hat{b}_2}\right) \cdot \sigma(t - t_0)$$

FIG 1

EP 1 064 457 B1

FIG 2

FIG 3

EP 1 064 457 B1

FIG 4A

FIG 4B

EP 1 064 457 B1

FIG 4C